# EUROPÄISCHE PATENTSCHRIFT

(11) **EP 3 047 250 B1**
(45) Veröffentlichungstag und Bekanntmachung des Hinweises auf die Patenterteilung: **22.11.2017**
(21) Anmeldenummer: 14765891.8
(22) Anmeldetag: 02.09.2014
(51) Int. Cl.: G01M 3/20

(54) **SCHNÜFFELLECKSUCHER MIT MEHRSTUFIGER MEMBRANPUMPE**
SNIFFING LEAK DETECTOR HAVING A MULTI-STAGE DIAPHRAGM PUMP
DÉTECTEUR DE FUITES PAR RENIFLAGE AVEC POMPE À DIAPHRAGME À PLUSIEURS ÉTAGES

(30) Priorität: 16.09.2013 DE 102013218506
(43) Veröffentlichungstag der Anmeldung: 27.07.2016
(73) Patentinhaber: Inficon GmbH, 50968 Köln (DE)
(72) Erfinder: HILGERS, Heike, 51427 Bergisch Gladbach (DE); BRUHNS, Hjalmar, 53115 Bonn (DE); WETZIG, Daniel, 50999 Köln (DE); ROLFF, Norbert, 50169 Kerpen (DE)
(74) Vertreter: dompatent von Kreisler Selting Werner - Partnerschaft von Patent- und Rechtsanwälten mbB
(86) Internationale Anmeldenummer: PCT/EP2014/068582
(87) Internationale Veröffentlichungsnummer: WO 2015/036282

(56) Entgegenhaltungen:
- DE-A1- 4 445 829
- DE-A1-102007 043 382
- DE-A1-102009 010 064

## Beschreibung

Die Erfindung betrifft einen Schnüffellecksucher mit einem Massenspektrometer und mit einer Schnüffelsonde, zur Analyse von Helium oder Wassersoff.

Bekannte Schnüffellecksucher werden zur Detektion von Gaslecks eingesetzt, wobei eine Schnüffelsonde das zu analysierende Gas ansaugt und einem Detektor zuführt, der in der Lage ist, einzelne Gasbestandteile in dem angesaugten Gas zu erkennen. Schnüffelsonden sind beispielsweise aus WO 2009/033978 A1 bekannt. Dort wird eine Schnüffelsonde beschrieben, die einen Messgasstrom von etwa 300 sccm einem Prüfgassensor zuführt. Bei Bedarf kann zur Erhöhung der Abstandsempfindlichkeit, der Schnüffelsonde unter Hinzuschaltung einer zweiten Saugleitung ein Gasstrom von etwa 3000 sccm erzeugt werden. Aus diesem Gasstrom zweigt der Messgasstrom mit 300 sccm ab. Der Messgasstrom wird einer für Prüfgas durchlässigen Membran zugeführt. WO2010/094582 A1 beschreibt das Grundprinzip, die Ansaugleitung einer Schnüffelsonde über eine verblockte Drossel mit dem Zwischeneinlass einer Vakuumpumpe zu verbinden. Jedoch ist dieser Druckschrift nichts im Hinblick auf eine mehrere Saugleitungen aufweisende Schnüffelsonde nach dem Oberbegriff von Anspruch 1 zu entnehmen.

Bekannt sind desweiteren Massenspektrometer zur Analyse von Helium oder Wasserstoff. Die Massenspektrometer sind mit einer Turbomolekularpumpe verbunden, deren Auslass mit einer Vorvakuumpumpe verbunden ist und deren Einlass der Messgasstrom zugeführt wird. Der Messgasstrom darf aus technischen Gründen nur etwa 50 sccm betragen. Herkömmlicherweise werden Massenspektrometrische Lecksucher im Vakuum eingesetzt, weil dort der geringe Messgasstrom von 50 sccm ausreicht. Für den Betrieb mit einer mehrere Saugleitungen aufweisenden Schnüffelsonde sind die herkömmlichen massenspektrometrischen Lecksucher nicht geeignet, weil der Messgasstrom der Schnüffelsonde von etwa 300 sccm für den Einlass der Turbomolekularpumpe und des Massenspektrometers zu groß ist.

Weitere Schnüffellecksucher sind aus DE 2009010064 A1, DE2007043382 A1 und DE 4445829 A1 bekannt. Der Erfindung liegt die Aufgabe zugrunde, einen massenspektrometrischen Lecksucher für die Schnüffellecksuche mit variablen Ansaugströmen der Schnüffelsonde zu schaffen.

Der erfindungsgemäße Schnüffellecksucher ist definiert durch die Merkmale von Patentanspruch 1.

Demnach ist das Massenspektrometer mit einer Schnüffelsonde verbunden, die mehrere Saugleitungen zum Ansaugen des zu analysierenden Gases aufweist.

Mit den mehreren Saugleitungen ist es möglich, variable Ansaugströme zu erzielen. Erfindungsgemäß wird der Schnüffellecksucher mit einer mindestens drei Stufen aufweisenden Vakuumpumpe betrieben, deren Eingangsstufe die Vorvakuumpumpe für die Turbomolekularpumpe bildet und deren weitere, nachfolgende Stufen zur Bereitstellung des variablen, wählbaren Ansaugstroms für die Schnüffelsonde dienen. Die Eingangsstufe ist über eine verblockte Drossel mit dem Auslass der Turbomolekularpumpe verbunden, um einen stabilen Vorvakuumdruck zu erzeugen. Die verblockte Drossel am Auslass der Turbomolekularpumpe erzeugt vorzugsweise einen Gasstrom von ca. 30 - 70 und insbesondere von etwa 50 sccm. Zwischen den nachfolgenden Stufen der mehrstufigen Vakuumpumpe sind jeweils Zwischeneinlässe vorgesehen, die verschieden große Gasströme ansaugen. Jeder der Zwischeneinlässe ist mit einer anderen Saugleitung der Schnüffelsonde verbunden. Der Zwischeneinlass hinter der Eingangsstufe und vor der nachfolgenden Stufe erzeugt den Messgasstrom für die Messgasleitung der Schnüffelsonde. Vorzugsweise beträgt dieser Messgasstrom etwa 200 - 400 sccm und vorzugsweise etwa 300 sccm. Aus dieser Messgasleitung wird die zum Einlass der Turbomolekularpumpe führende Leitung abgezweigt, in der ebenfalls eine verblockte Drossel vorgesehen sein kann, um den erforderlichen Eingangsstrom für das Massenspektrometer von typischerweise etwa 50 sccm (zwischen 30 und 70 sccm) zu erzeugen. Der nächste Zwischeneinlass erzeugt einen größeren Gasstrom, vorzugsweise im Bereich zwischen 2000 und 4000 sccm und vorteilhafterweise etwa 3000 sccm. Dieser Zwischeneinlass mit dem größeren Gasstrom ist mit einer anderen Saugleitung der Schnüffelsonde verbunden. Dieser Zwischeneinlass kann wahlweise zugeschaltet bzw. geöffnet werden, um einen größeren Ansaugstrom am Einlass der Schnüffelsonde zu erzeugen. Aus diesem größeren Ansaugstrom wird der geringere Ansaugstrom für die Messgasleitung von etwa 300 sccm abgezweigt. Mit "etwa" ist vorliegend eine Abweichung von max. +/- 10% des genannten Wertes gemeint.

Von besonderem Vorteil ist es wenn die Vakuumpumpe eine vierstufige Vakuumpumpe ist, wobei die ersten beiden Stufen parallel geschaltet sind und die Vorvakuumpumpe für die Turbomolekularpumpe bilden. Das dadurch erzielte größere Saugvermögen ist notwendig zur Erzeugung eines möglichst niedrigen Drucks hinter der Blende am Punkt B, um die Verblockung der Strömung durch diese Blende zu gewährleisten.

Die Erfindung ermöglicht es, eine Schnüffelsonde mit mehreren Saugleitungen zur massenspektrometrischen Lecksuche zu verwenden. Mit der mehrstufigen Vakuumpumpe werden dabei sowohl die Teilgasströme für die verschiedenen Saugleitungen der Schnüffelsonde als auch der Vorvakuumdruck für die Turbomolekularpumpe des Massenspektrometers erzeugt. Eine Trennung zwischen der Vorvakuumpumpe und den Pumpstufen für die Teilgasströme der Schnüffelsonde ist nicht erforderlich, weil die Eingangsstufe über eine den Gasstrom verblockende Drossel mit der Turbomolekularpumpe verbunden ist und so einen ausreichend stabilen Gasdruck für den Prüfgasnachweis erzeugt. Bei Zu- oder Abschaltung des größeren Gasstroms für die Schnüffelsonde ändert sich die auf die Turbomolekularpumpe wirkende Gaslast nicht oder zumindest in vernachlässigbarer Weise. Die Druckschwankungen durch Zu- oder Abschalten der verschiedenen Saugleitungen der Schnüffelsonde wirken somit nicht auf den Vordruck in der Ausgangsleitung der Turbomolekularpumpe. Insbesondere ist es möglich, an der Schnüffelsonde durch wahlweises Zu- oder Abschalten einzelner Saugleitungen einen Ansaugstrom im Bereich von etwa 300 sccm oder im Bereich von sogar etwa 3000 sccm mit derselben Vakuumpumpe zu erzeugen, die die Vorvakuumpumpe für das Massenspektrometer bildet und ohne dass das Umschalten zwischen den hohen Gasflüssen an der Schnüffelsonde sich auf den Vorvakuumdruck am Massenspektrometer auswirkt.

Von den mehreren Saugleitungen der Schnüffelsonde kann eine als Messgasleitung zum Ansaugen des zu analysierenden Gases ausgebildet sein. Diese Messgasleitung ist dann mit der Turbomolekularpumpe des Massenspektrometers verbunden. Die übrigen Saugleitungen der Schnüffelsonde können dann dazu dienen, den Gasstrom zu variieren, dem die Messgasleitung das zu analysierende Gas entnimmt. Durch Hinzuschalten einer oder mehrerer Saugleitungen kann beispielsweise der Gasstrom erhöht werden. Alternativ kann es auch möglich sein, eine aus mehreren Saugleitungen auszuwählen und diese als Messgasleitung mit der Turbomolekularpumpe zu verbinden. Dabei wird dann jeweils nur eine der mehreren Saugleitungen betrieben.

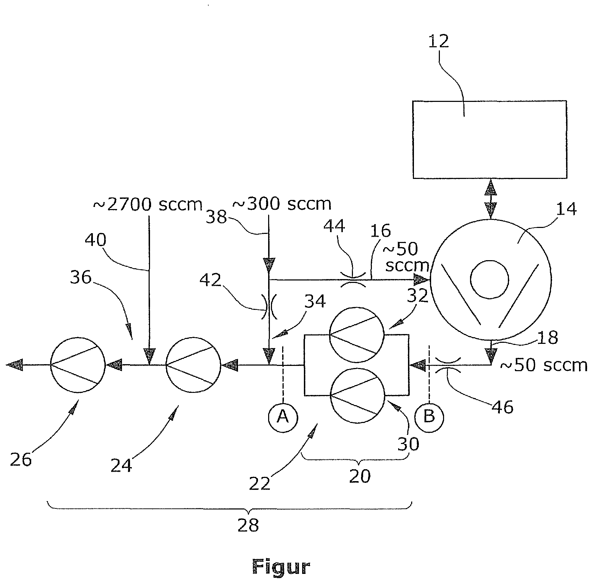

Im Folgenden wird anhand der Figur ein Ausführungsbeispiel der Erfindung näher erläutert. Die Figur zeigt ein Blockschaltbild des Ausführungsbeispiels.

Ein Massenspektrometer 12 ist in herkömmlicher Weise mit einer Turbomolekularpumpe 14 für die massenspektrometrische Gasanalyse verbunden. Die Turbomolekularpumpe 14 weist einen Einlass 16 und einen Auslass 18 auf. Am Einlass 16 und am Auslass 18 liegt jeweils ein Gasfluss von etwa 50 sccm an.

Der Auslass 18 ist mit einer Vorvakuumpumpe 20 verbunden. Die Vorvakuumpumpe 20 wird von der Eingangsstufe 22 einer mehrstufigen Vakuumpumpe 28 gebildet.

Die Vakuumpumpe 28 ist vierstufig, wobei die ersten beiden Stufen 30, 32 parallel geschaltet sind und die Eingangsstufe 22 bilden. Zwischen der Eingangsstufe 22 und einer Zwischenstufe 24 ist ein erster Zwischeneinlass 34 ausgebildet. Zwischen der Zwischenstufe 24 und der Ausgangsstufe 26 ist ein weiterer Zwischeneinlass 36 ausgebildet. Jede der Pumpenstufen 30, 32, 24, 26 besteht aus einer Membranpumpe. Der erste Zwischeneinlass 34 ist mit der Messgasleitung 38 einer Schnüffelsonde verbunden. Die Messgasleitung 38 ist eine erste Saugleitung der Schnüffelsonde. Eine weitere Saugleitung 40 der Schnüffelsonde ist mit dem zweiten Zwischeneinlass 36 verbunden.

Die Ausgangsstufe 26 erzeugt an dem zweiten Zwischeneinlass 36 und in der zweiten Saugleitung 40 der Schnüffelsonde eine Gasströmung von etwa 2700 sccm. Die Zwischenstufe 24 erzeugt an dem ersten Zwischeneinlass 34 und in der Messgasleitung 38 der Schnüffelsonde eine Gasströmung von etwa 300 sccm. Die Messgasleitung 38 ist mit dem ersten Zwischeneinlass 34 über eine den Gasstrom verblockende Drossel 42 verbunden, um an der Aufteilung des Gasstroms aus der Messgasleitung 38 stabile Druckbedingungen zu schaffen. Der dem Einlass 16 der Turbomolekularpumpe zugeführte Teilstrom wird durch eine weitere verblockende Drossel 44 geführt, um den für den Einlass 16 der Turbomolekularpumpe 14 und des Massenspektrometers 12 erforderlichen Gasstrom von etwa 50 sccm zu erzeugen und stabil zu halten.

Der durch den zweiten Zwischeneinlass 36 geführte größere Gasstrom der zweiten Saugleitung 40 kann an der Schnüffelsonde wahlweise zugeschaltet werden, um einen großen Ansaugstrom am Einlass der Schnüffelsonde von ca. 3000 sccm zu schaffen. Aus diesem Ansaugstrom entnimmt die Messgasleitung 38 den Messgasteilstrom von etwa 300 sccm. Durch das wahlweise Zuschalten der zweiten Saugleitung 40 an der Schnüffelsonde erhöht sich die Empfindlichkeit des Schnüffellecksuchers in größerer Entfernung von der Schnüffelsonde. Der Auslass 18 der Turbomolekularpumpe ist über eine verblockende Drossel 46 mit der Vorvakuumpumpe 20, das heißt also mit der Eingangsstufe 22 der Vakuumpumpe 28 verbunden. Mit Hilfe der Drossel 46 liegt am Auslass 18 der Turbomolekularpumpe 14 ein ausreichend stabiler Gasdruck bzw. Gasstrom an, der durch das wahlweise Zu- oder Abschalten der zweiten Saugleitung 40 an der Schnüffelsonde nicht beeinflusst wird.

Mit Verblockung ist bei den Drosseln 42, 44, 46 gemeint, dass die Drossel einen stabilen Gasfluss erzeugt, der unabhängig von den herrschenden Druck- und Strömungsverhältnissen einen vorgegebenen Wert nicht übersteigt.

## Patentansprüche

1. Schnüffellecksucher mit
einem Massenspektrometer (12) zur Analyse von Wasserstoff oder Helium,
einer mit dem Massenspektrometer (12) verbundenen Turbomolekularpumpe (14) und deren Auslass (18) mit einer Vorvakuumpumpe (20) verbunden ist,
einer mehrere Saugleitungen (38, 40) aufweisenden Schnüffelsonde, die mit dem Einlass (16) der Turbomolekularpumpe (14) verbunden ist, und
**gekennzeichnet, durch**
einer mindestens dreistufigen Vakuumpumpe (28), deren Eingangsstufe (22) die Vorvakuumpumpe (20) bildet und über eine verblockte Drossel (46) mit dem Auslass (18) der Turbomolekularpumpe (14) verbunden ist,
wobei zwischen benachbarten Stufen (22, 24, 26) der Vakuumpumpe (28) jeweils ein Zwischeneinlass (34, 36) vorgesehen ist, wobei jeder Zwischeneinlass (34, 36) mit einer anderen Saugleitung der Schnüffelsonde verbunden ist und mindestens eine der Saugleitungen (38, 40) als Ansaugleitung (38) mit dem Einlass (16) der Turbomolekularpumpe (14) zur Erzielung verschiedener Gasströme verbunden ist.

2. Schnüffellecksucher nach Anspruch 1, **dadurch gekennzeichnet, dass** die Vakuumpumpe (28) mindestens vierstufig ausgebildet ist, wobei die beiden ersten Stufen (30, 32) parallelgeschaltet sind und die Vorvakuumpumpe (20) bilden.

3. Schnüffellecksucher nach Anspruch 2, **dadurch gekennzeichnet, dass** die Vakuumpumpe (28) eine vierstufige Membranpumpe ist, deren Ausgangsstufe (26) einen Gasstrom im Bereich zwischen 2000 und 4000 sccm und deren vorletzte Pumpstufe (24) einen Gasstrom im Bereich zwischen 200 und 400 sccm erzeugt.

4. Schnüffellecksucher nach einem der vorhergehenden Ansprüche, **dadurch gekennzeichnet, dass** die Ansaugleitung (38) über eine verblockte Drossel (42) mit dem Zwischeneinlass (34) verbunden ist.

5. Schnüffellecksucher nach einem der vorhergehenden Ansprüche, **dadurch gekennzeichnet, dass** die jeweiligen Pumpstufen (22, 24, 26) derart ausgebildet sind, dass in den Saugleitungen (38, 40) ein Saugstrom generiert wird, der jeweils mindestens um einen Faktor 5 größer ist als der daraus zur Turbomolekularpumpe (14) hin abgezweigte Messgasstrom für das Massenspektrometer (12).

6. Schnüffellecksucher nach einem der vorhergehenden Ansprüche, **dadurch gekennzeichnet, dass** der Einlassstrom der Turbomolekularpumpe (14) ca. 30 - 70 sccm und vorzugsweise etwa 50 sccm beträgt.

7. Schnüffellecksucher nach einem der vorhergehenden Ansprüche, **dadurch gekennzeichnet, dass** die Ansaugleitung (38) der Turbomolekularpumpe (14) mit einer verblockten Blende (44) versehen ist, die den Einlassstrom der Turbomolekularpumpe (14) gemäß dem vorhergehenden Anspruch einstellt.

## Claims

1. A sniffing leak detector comprising
a mass spectrometer (12) for analyzing hydrogen or helium,
a turbomolecular pump (14) connected to the mass spectrometer (12) and having its outlet (18) connected to a prevacuum pump (20),
a sniffer probe including a plurality of intake lines (38, 40) and connected to the inlet (16) of the turbomolecular pump (14), and
**characterized by**
a vacuum pump (28) including at least three stages, the inlet stage (22) of the vacuum pump defining the prevacuum pump (20) and being connected to the outlet (18) of the turbomolecular pump (14) via a blocked throttle (46),
wherein, between adjacent stages (22, 24, 26) of the vacuum pump (28), a respective intermediate inlet (34, 36) is provided, wherein each intermediate inlet (34, 36) is connected to a different intake line of the sniffer probe and at least one of the intake lines (38, 40) is connected as a suction line (38) to the inlet (16) of the turbomolecular pump (14) for obtaining different gas flows.

2. The sniffing leak detector according to claim 1, **characterized in that** the vacuum pump (28) includes at least four stages, wherein the two first stages (30, 32) are connected in parallel and define the prevacuum pump (20).

3. The sniffing leak detector according to claim 2, **characterized in that** the vacuum pump (28) is a four-stage membrane pump whose outlet stage (26) generates a gas flow in the range between 2000 and 4000 sccm and whose next-to-last pump stage (24) generates a gas flow in the range between 200 and 400 sccm.

4. The sniffing leak detector according to any one of the preceding claims, **characterized in that** the suction line (38) is connected with the intermediate inlet (34) via a blocked throttle (42).

5. The sniffing leak detector according to any one of the preceding claims, **characterized in that** the respective pump stages (22, 24, 26) are configured in such a manner that, in the intake lines (38, 40), an intake flow is generated which is larger by at least a factor of 5 than the measuring gas flow branched off therefrom towards the turbomolecular pump (14) and destined for the mass spectrometer (12).

6. The sniffing leak detector according to any one of the preceding claims, **characterized in that** the inlet flow of the turbomolecular pump (14) amounts to approximately 30 - 70 sccm, and preferably approximately 50 sccm.

7. The sniffing leak detector according to any one of the preceding claims, **characterized in that** the suction line (38) of the turbomolecular pump (14) is provided with a blocked orifice (44) adjusting the inlet flow of the turbomolecular pump (14) according to the preceding claim.

## Revendications

1. Système de recherche de fuites par reniflage avec :
- un spectromètre de masse (12) destiné à l'analyse d'hydrogène ou d'hélium ;
- une pompe turbomoléculaire (14) qui est raccordée au spectromètre de masse (12) et dont la sortie (18) est raccordée à une pompe à vide préliminaire (20) ;
- une sonde de reniflage qui présente plusieurs conduites d'aspiration (38, 40) et qui est raccordée à l'entrée (16) de la pompe turbomoléculaire (14) ; et
**caractérisé par**
une pompe à vide (28) comportant au moins trois étages, dont l'étage d'entrée (22) constitue la pompe à vide préliminaire (20) et qui est raccordée à la sortie (18) de la pompe turbomoléculaire (14) par l'intermédiaire d'un étrangleur (46) bloqué ;
selon lequel une entrée intermédiaire (34, 36) est prévue respectivement entre des étages (22, 24, 26) adjacents de la pompe à vide (28) ;
selon lequel chaque entrée intermédiaire (34, 36) est raccordée à une autre conduite d'aspiration de la sonde de reniflage et au moins l'une des conduites d'aspiration (38, 40) est raccordée à l'entrée (16) de la pompe turbomoléculaire (14) sous la forme d'une conduite d'aspiration (38), en vue de l'obtention de différents flux de gaz.

2. Système de recherche de fuites par reniflage selon la revendication 1, **caractérisé en ce que** la pompe à vide (28) est conçue avec au moins quatre étages, selon lequel les deux premiers étages (30, 32) sont montés en parallèle et constituent la pompe à vide préliminaire (20).

3. Système de recherche de fuites par reniflage selon la revendication 2, **caractérisé en ce que** la pompe à vide (28) est une pompe pneumatique à membrane et à quatre étages, dont l'étage de sortie (26) génère un flux de gaz dans une plage comprise entre 2000 et 4000 sccm et dont l'avant dernier étage de pompe (24) génère un flux de gaz dans une plage comprise entre 200 et 400 sccm.

4. Système de recherche de fuites par reniflage selon l'une des revendications précédentes, **caractérisé en ce que** la conduite d'aspiration (38) est raccordée à l'entrée intermédiaire (34) par l'intermédiaire d'un étrangleur (42) bloqué.

5. Système de recherche de fuites par reniflage selon l'une des revendications précédentes, **caractérisé en ce que** les étages de pompe (22, 24, 26) respectifs sont conçus de telle sorte qu'un courant d'aspiration est généré dans les conduites d'aspiration (38, 40), lequel correspond respectivement à un facteur au moins cinq fois supérieur au flux de gaz de mesure qui en est dérivé vers la pompe turbomoléculaire (14) pour le spectromètre de masse (12).

6. Système de recherche de fuites par reniflage selon l'une des revendications précédentes, **caractérisé en ce que** le flux à l'entrée de la pompe turbomoléculaire (14) est compris entre environ 30 à 70 sccm et est de préférence d'environ 50 sccm.

7. Système de recherche de fuites par reniflage selon l'une des revendications précédentes, **caractérisé en ce que** la conduite d'aspiration (38) de la pompe turbomoléculaire (14) est pourvue d'un diaphragme (44) bloqué, lequel régule le flux à l'entrée de la pompe turbomoléculaire (14) conformément à la revendication précédente.
